(19) **Europäisches Patentamt European Patent Office Office européen des brevets**

(11) **EP 2 457 334 B1**

(12) # EUROPEAN PATENT SPECIFICATION

(45) Date of publication and mention of the grant of the patent:
**14.02.2018 Bulletin 2018/07**

(21) Application number: **10802648.5**

(22) Date of filing: **06.07.2010**

(51) Int Cl.:
*H04L 25/02* (2006.01)      *H04B 7/06* (2006.01)

(86) International application number:
**PCT/US2010/041027**

(87) International publication number:
**WO 2011/011192 (27.01.2011 Gazette 2011/04)**

(54) **TECHNIQUES FOR MIMO BEAMFORMING FOR FREQUENCY SELECTIVE CHANNELS IN WIRELESS COMMUNICATION SYSTEMS**

VERFAHREN ZUR MIMO-STRAHLFORMUNG FÜR FREQUENZAUSWAHLKANÄLE IN DRAHTLOSEN KOMMUNIKATIONSSYSTEMEN

TECHNIQUES DE FORMATION DE FAISCEAUX MIMO POUR DES CANAUX SÉLECTIFS EN FRÉQUENCE DANS DES SYSTÈMES DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **20.07.2009 US 460521**

(43) Date of publication of application:
**30.05.2012 Bulletin 2012/22**

(73) Proprietor: **Intel Corporation**
**Santa Clara, CA 95052 (US)**

(72) Inventors:
• **LI, Qinghua**
**San Ramon**
**California 94582 (US)**
• **LIN, Xintian E.**
**Mountain View**
**California 94043 (US)**
• **ZHANG, Senjie**
**Zhongguan Cu 100084 (CN)**
• **LI, Guangjie**
**Beijing 102208 (CN)**

(74) Representative: **HGF Limited**
**8th Floor**
**140 London Wall**
**London EC2Y 5DN (GB)**

(56) References cited:
**US-A1- 2006 056 531      US-A1- 2007 104 163**
**US-A1- 2007 206 626**

• **CHOI J ET AL: "Interpolation Based Transmit Beamforming for MIMO-OFDM With Limited Feedback", IEEE TRANSACTIONS ON SIGNAL PROCESSING, IEEE SERVICE CENTER, NEW YORK, NY, US, vol. 53, no. 11, 1 November 2005 (2005-11-01), pages 4125-4135, XP011141126, ISSN: 1053-587X, DOI: 10.1109/TSP.2005.857019**
• **TARKESH PANDE ET AL: "Reduced Feedback MIMO-OFDM Precoding and Antenna Selection", IEEE TRANSACTIONS ON SIGNAL PROCESSING, IEEE SERVICE CENTER, NEW YORK, NY, US, vol. 55, no. 5, 1 May 2007 (2007-05-01), pages 2284-2293, XP011179569, ISSN: 1053-587X, DOI: 10.1109/TSP.2006.890936**
• **'IEEE International Conference on Communications', June 2004 article JIHOON CHOI ET AL.: 'Interpolation based transmit beamforming or MIMO-OFDM with limited feedback', pages 249 - 253, XP010709997**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

In wireless communications, beamforming with matrix feedback has been used to provide significant improvements. Previously, when beamforming has been used, there was only one beamforming matrix feedback per frequency subband. This causes an approximate 10% performance degradation due to frequency selectivity across the subband. The beamforming matrix is then used for the transmit beamforming for the whole subband. This causes performance degradation because the channel response and thus the ideal beamforming matrix vary across the subcarriers within the subband. This problem gets severe as the subband bandwidth increases.

Choi, J. et al: "Interpolation based transmit beamforming for MIMO-OFDM with limited feedback", IEEE Trans. Signal Processing, 53(11), 1 Nov. 2005, pp 4125-4135 refers to a limited feedback architecture in MIMO-OFDM in which a receiver sends a fraction of information about optimal beamforming vectors to a transmitter and the transmitter computes beamforming vectors for subcarriers by interpolation using a spherical interpolator that uses parameters of phase rotation to satisfy phase invariance and unit norm properties of the transmitted beamforming vectors.

Tarkesh Pande et al: "Reduced feedback MIMO-OFDM pre-coding and antenna selection", IEEE Trans. Signal Processing, 55(5), 1 May 2007, pp 2284-2293 refers to reducing the feedback requirement for precoder matrices for MIMO-OFDM system subcarriers.

US 2007/206626 refers to determining a transmission beamforming vector, taking a time-variant channel into account, in a codebook-based MIMO-PFDM communication system.

Thus, a strong need exists for improved techniques for MIMO beamforming for frequency selective channels in wireless communication systems.

According to a first aspect of the invention, there is provided an apparatus, as claimed in claim 1.

According to a second aspect of the invention, there is provided a method, as claimed in claim 9.

According to a third aspect of the invention, there is provided a computer readable medium encoded with computer executable instructions, as claimed in claim 17.

According to a fourth aspect of the invention, there is provided a system, as claimed in claim 18.

Further embodiments of the invention are included in the dependent claims.

BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

FIG. 1 depicts a frequency selective channel across 72 subcarriers;
FIG. 2 depicts the beamforming angle variation across 72 subcarriers for a 2x2 MIMO channel;
FIG. 3 is an illustration of one beamforming matrix and an interpolated two beamforming matrix according to an embodiment of the present invention;
FIG. 4 provides an illustration of a geodesic on Grassmann manifold according to an embodiment of the present invention;
FIG. 5 illustrates the interpolation III the angle domain and vector domain according to an embodiment of the present invention;
FIG. 6 illustrates feedbacks of a subband over time according to an embodiment of the present invention; and
FIG. 7 provides a channel capacity comparison for weakly correlated 2x2 channels with a single stream transmission according to an embodiment of the present invention.

It will be appreciated that for simplicity and clarity of illustration, elements illustrated in the figures have not necessarily been drawn to scale. For example, the dimensions of some of the elements are exaggerated relative to other elements for clarity. Further, where considered appropriate, reference numerals have been repeated among the figures to indicate corresponding or analogous elements.

DETAILED DESCRIPTION

In the following detailed description, numerous specific details are set forth in order to provide a thorough understanding of the invention. However, it will be understood by those skilled in the art that the preset invention may be practiced without these specific details. In other instances, well-known methods, procedures, components and circuits have not been described in detail so as not to obscure the present invention.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. For example, "a plurality of stations" may include two or more stations.

Embodiments of the present invention provide schemes that feed back a plurality, such as two, beamforming matrixes per subband and interpolate the beamforming matrixes across the subband. In an embodiment of the present invention, a novel interpolation scheme is provided, which minimizes the interpolation error. A gain of 4.1 % is achieved for typical channels under the same feedback overhead. Depending on the system configuration, the whole frequency band may consist of one or multiple subbands.

As set forth above, in existing systems, only one beamforming matrix is fed back per frequency subband. The beamforming matrix is then used for the transmit beamforming for the whole subband. This causes performance degradation because the channel response and thus the ideal beamforming matrix vary across the subcarriers within the subband. This problem gets severe as the subband bandwidth increases.

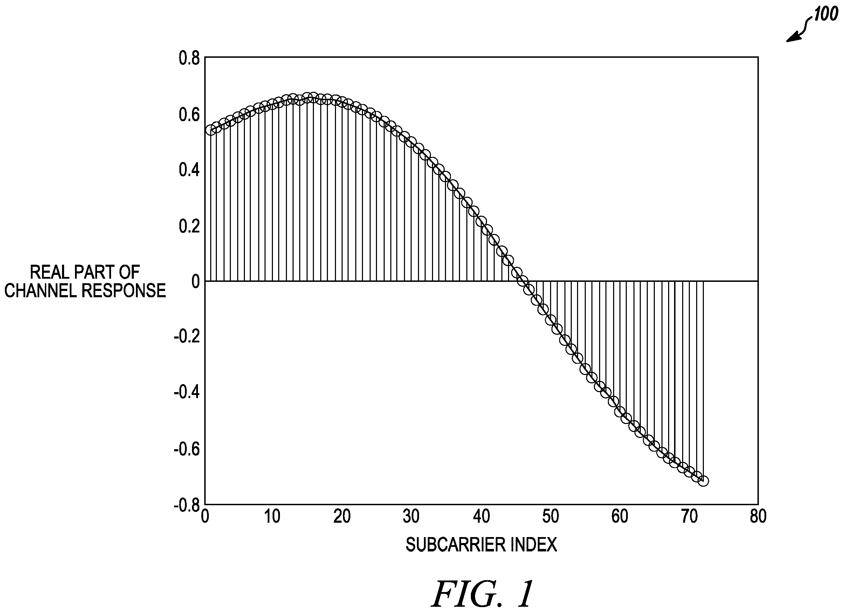

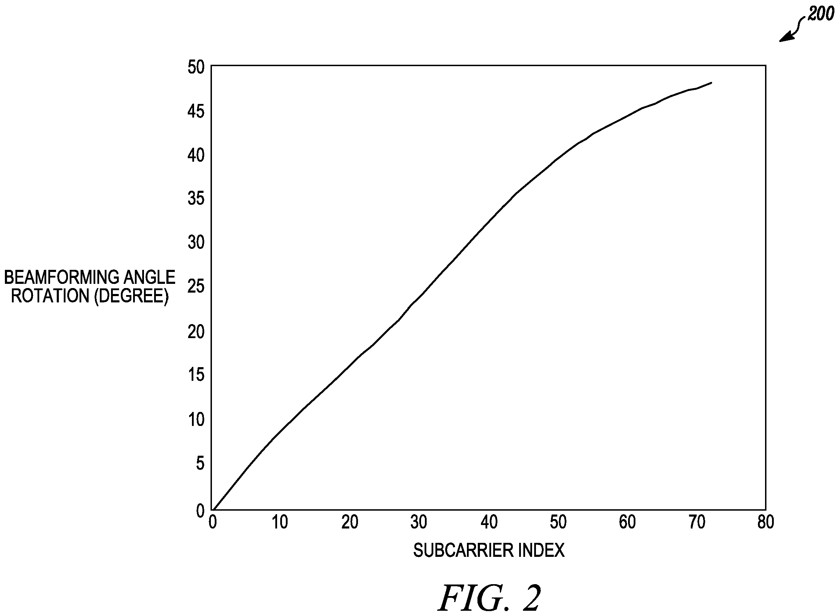

For multiuser multiple input multiple output (MIMO), a large subband width is used to increase the chance of user pairing. Therefore, the subband usually has 72 subcarriers i.e. about 800 kHz. The variation of the channel response within the subband causes the ideal beamforming angle to vary for about 60 degrees for typical channels, which are spatially uncorrelated and spatially weakly correlated MIMO channels. An example of the real part of the channel response is shown in FIG. 1, generally as 100. The corresponding beamforming angle varies across the 72 subcarriers as shown in FIG. 2, generally as 200. The angle variation reduces the beamforming accuracy for the edges of the subband and causes strong interference across users' signals for the downlink of multiuser MIMO. In addition, the variation of the signal quality within the subband may also limit the usage of high rate channel codes. It is desirable to reduce the variation and improve the beamforming accuracy.

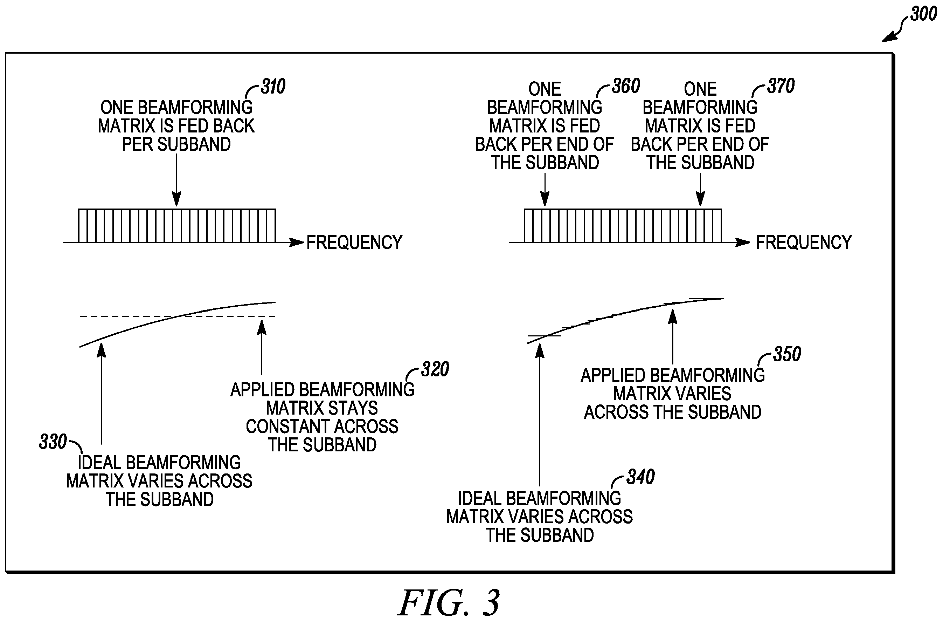

In embodiments of the present invention, instead of one beamforming matrix, the present invention provides feeding back a plurality, such as two, beamforming matrixes. This is particularly useful, if uplink feedback width is available or one user's rough beamforming causes strong interference to the others. It can be an optional configuration for the mobile user to generate two feedbacks per subband. Since the feedback channel can indeed carry more bits for strong users, this option allows the strong users to benefit from their good channels. The two beamforming matrixes are for each of the two ends of subband, respectively. Interpolation may be made for all the beamforming matrixes in the subband using the two fed back matrixes. The applied beamforming matrixes vary across the subband and some embodiments of the present invention select the feedback indexes of the two beamforming matrixes at the two subband ends jointly, taking the interpolation into account. Turning now to FIG. 3 at 300 is an illustration of an embodiment of the present invention and existing arts use of a single beamforming matrix 310, 360 and 370 is illustrated, wherein at 330, 320, 340 and 350 an embodiment of the present invention using a plurality of beam forming matrices with interpolation is shown.

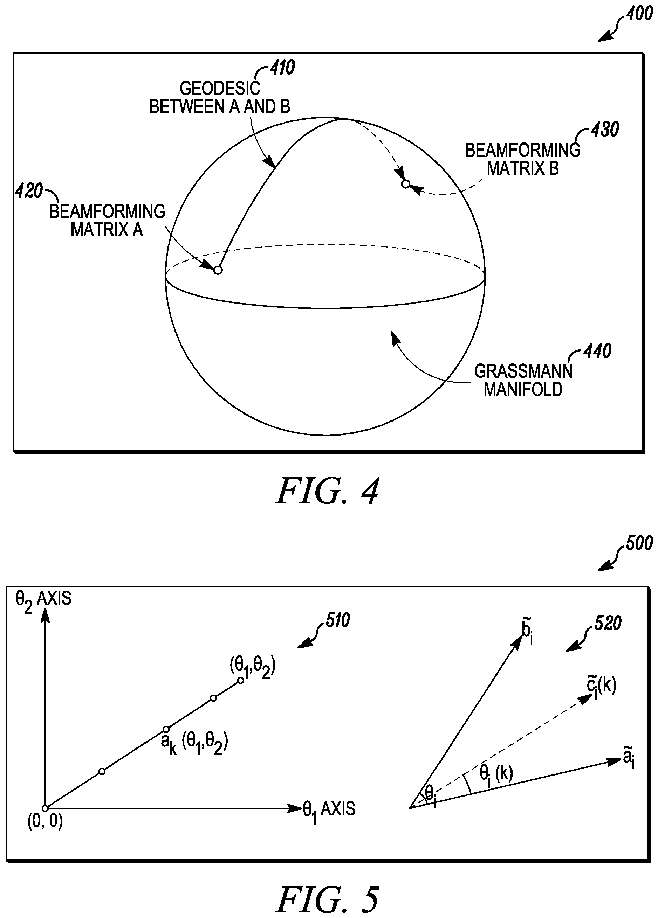

There are multiple ways to interpolate the beamforming matrixes between the two fed back beamforming matrixes. Note that the beamforming matrix is unitary and it is on the Grassmann manifold as shown in FIG. 4, generally shown as 400. There are multiple curves connecting the two fed back matrixes A 410 and B 420 and the interpolated matrixes are on the connecting curve 430. Each curve corresponds to a series of random channel realization. The curve that minimizes the average interpolation error is the geodesic 430 connecting A 410 and B 420.

Let $M = A^H B$, where A and B are the fed back beamforming matrixes; A and B are $N_t \times N_s$ unitary matrixes, i.e. $A^H A = I$ and $B^H B = I$; $N_t$ is the number of transmit antennas and $N_S$ is the number of beamformed streams. Particularly, a single spatial stream is sent and the beamforming matrixes A and B are $N_t \times 1$ vectors when $N_S = 1$. The singular value decomposition of M is given by

$$M = Q_A \Sigma Q_B^H \qquad (1)$$

where $Q_A$ and $Q_B$ are $N_S \times N_S$ orthogonal matrixes and $\Sigma$ is a diagonal matrix. Let
$\tilde{A} = A Q_A$ and $\tilde{B} = B Q_B$. Then,

$$\widetilde{A}^H \widetilde{B} = \begin{bmatrix} \sigma_1 & & \\ & \ddots & \\ & & \sigma_{N_S} \end{bmatrix}. \tag{2}$$

Let $\sigma_i = \cos\theta_i$ for $i = 1,...,N_S$. $\theta_i$ is the angle between the i-th column of $\widetilde{A}$, denoted by $\widetilde{a}_i$, and the i-th column of $\widetilde{B}$, denoted by $\widetilde{b}_i$, as illustrated on the right in Figure 4. A linear interpolation is first conducted in the domain of the principal angles $\theta_i$ s as illustrated on the left in Figure 4. The interpolated angle for the k-th subcarrier is computed as

$$\theta_i(k) = a_k \theta_i, \qquad \text{for } i = 1, \cdots, N_S \tag{3}$$

where

$$a_k = \left| \frac{f_k - f_A}{f_A - f_B} \right| \tag{4}$$

is inversely proportional to the frequency spacing between A's subcarrier and B's subcarrier, i.e. $|f_A\text{-}f_B|$ and is proportional to the frequency spacing between A's subcarrier and the k-th subcarrier, i.e. $|f_k\text{-}f_A|$. After the angle is interpolated, a vector $\widetilde{c}_i(k)$ interpolated between the i-th column of $\widetilde{A}$, $\widetilde{a}_i$, and the i-th column of $\widetilde{B}$, $\widetilde{b}_i$, is computed as illustrated on the right in Figure 5. The $c_i(k)$ has unit norm and stays in the plane spanned by $\widetilde{a}_i$ and $\widetilde{b}_i$. In addition, the angle between $\widetilde{c}_i(k)$ and $\widetilde{a}_i$ is $\theta_i(k)$. Finally, the interpolated beamforming matrix is formed by

$$\widetilde{C}(k) = \begin{bmatrix} \widetilde{c}_1(k) & \cdots & \widetilde{c}_{N_S}(k) \end{bmatrix}. \tag{5}$$

If $\widetilde{C}(k)$ is not a unitary matrix, it can be converted to a unitary matrix that spans the same subspace using algorithms such as QR decomposition or Grant-Schmidt operation. In order to minimize the phase transition of the beamforming matrixes across the subband, an $N_S \times N_S$ orthogonal matrix Q(k) can be multiplied from the right to each beamforming matrix including A, B, and $\widetilde{C}(k)$s. For example, $\widetilde{C}(k)$ may be converted to C(k) as

$$C(k) = \widetilde{C}(k)Q(k), \tag{6}$$

where Q(k) may be equal to $Q_A^H$; C(k) is used for actual beamforming.

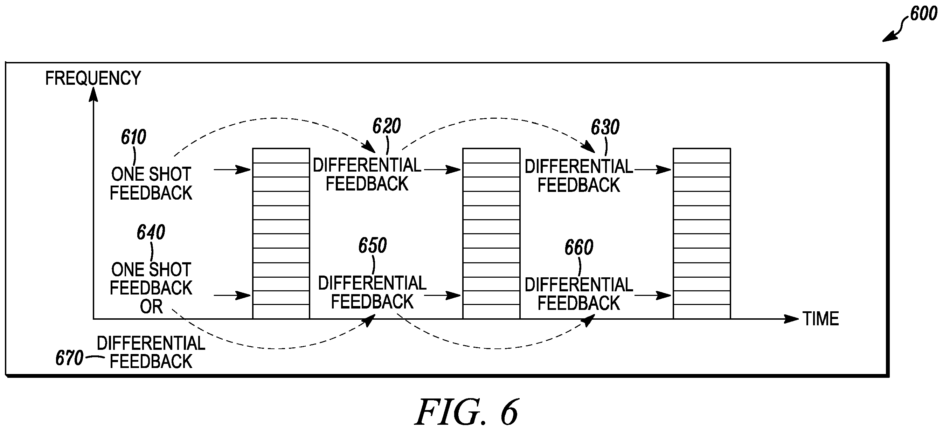

Looking now at FIG. 5 at 500 is illustrated an interpolation in the angle domain 510 and vector domain 520. It should be noted that the interpolation may be applied across frequency and/or time. When it is applied in the time domain, it may be used with a channel prediction technique. The beamforming matrix of a future time may be predicted through the prediction of the corresponding channel matrix. The beamforming matrixes between the one of the latest observed channel and the predicted channel may be computed from the interpolation. In addition, the interpolation may be applied with one-shot feedback or differential feedback. With the differential feedback, the feedback of two beamforming matrixes per subband can be run as shown in FIG. 6 at 600. At the beginning of each feedback period, a one-shot feedback is needed, which fully depicts the beamforming matrix without the previous feedback. The one-shot feedback is for one end of the subband and the feedback for the other end of the subband can be either one-shot feedback 610, 640 and 670 or differential feedback 620, 650, 630, and 660. The reliability is increased if one-shot feedback is used again because the beamforming may still partially work if one of the two one-shot feedbacks is corrupted. On the other hand, the differential feedback using the one-shot as reference reduces the feedback overhead. After the initialization with one-shot feedback, two differential feedbacks at a time are sent using the previous feedbacks as shown as 500 of FIG. 5.

For complexity reduction and performance enhancement, the receiver may select two beamforming matrixes close to the two ends of the subband and interpolate the beamforming matrixes only for a selected subset of subcarriers. For example, the receiver may partition the 72 subcarriers within the subband in 18-subcarrier group. The 18 subcarriers in each group are contiguous. The beamforming matrixes of the group center subcarriers are fed back or interpolated. The fed and interpolated beamforming matrixes are used for each group without further interpolation.

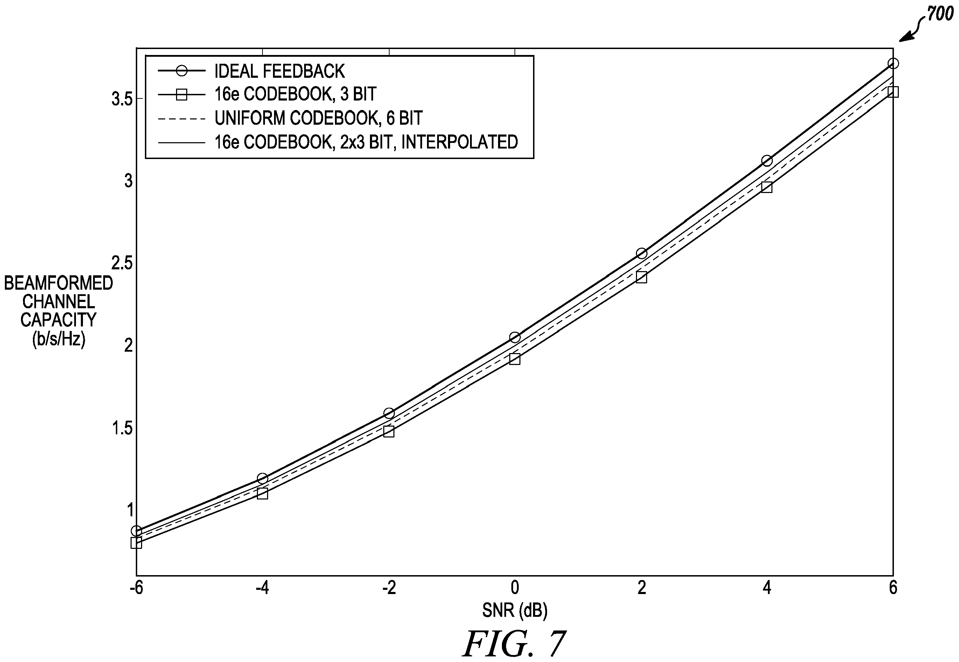

Looking now at FIG. 7 at 700 is a channel capacity comparison for weakly correlated 2x2 channels with a single stream transmission. Simulation is made for 2x2 single-user MIMO with 1 stream transmission and Pedestrian B eITU channels without spatial correlation. As a baseline, the 802.16e 3-bit codebook is used for the center subcarrier of the subband, i.e. the 37-th subcarrier. It is compared to two enhancement options that may be included in embodiments of the present invention. The first one increases the codebook resolution by using an optimal 6-bit codebook that has uniformly distributed codewords. The feedback is only for the center subcarrier and the performance is increased by 2.5 %. However, adding the 6-bit codebook increases the number of codebooks and complicates the system design. The other option sends two feedbacks using the 802.16e 3-bit codebook as shown on at 300 of FIG. 3. The two feedback codewords are selected such that the beamforming gain with the interpolation is maximized. The second option increases the performance by 4.1 % without adding a new codebook. Therefore, the second option is more desirable in view of both performance and complexity.

While certain features of the invention have been illustrated and described herein, many modifications, substitutions, changes, and equivalents may occur to those skilled in the art. It is, therefore, to be understood that the appended claims are intended to cover all such modifications and changes as fall within scope of the claims.

## Claims

1.  An apparatus, comprising:

    a transceiver adapted for multiple input multiple output, MIMO, beamforming and further adapted for communication with a receiver that feeds back to said transceiver two beamforming matrixes (360, 370) per subband to form $N_s$ vector pairs, where $N_s$ is a number of beamformed streams in the two beamforming matrixes, and wherein the transceiver is adapted to:

    linearly interpolate each vector pair in the angle domain along a Grassman manifold to determine an interpolated angle for each beamformed stream, wherein the interpolated angle is computed as $\theta_i(k) = a_k\theta_i$, for

    $$a_k = \left| \frac{f_k - f_A}{f_A - f_B} \right|$$

    $i = 1,\cdots,N_s$ where is inversely proportional to a frequency spacing between A's subcarrier and B's subcarrier of $|f_A - f_B|$ and is proportional to a frequency spacing between A's subcarrier and a k-th subcarrier of $|f_k - f_A|$, wherein A and B are the two beamforming matrixes;
    compute an interpolated vector for each interpolated angle on a plane spanned by the vector pair associated with the vector angle; and
    form an interpolated beamforming matrix comprising the interpolated vectors for each of the beamformed streams, wherein the interpolated beamforming matrix is a unitary matrix or a non-unitary matrix, and the interpolated beamforming matrix is converted to a unitary matrix when the interpolated beamforming matrix is a non-unitary matrix.

2.  The apparatus of claim 1, wherein said two beamforming matrixes per subband are two beamforming matrixes for each end of said subband.

3.  The apparatus of claim 1, wherein said interpolation is applied across a frequency or time domain and when it is applied in said time domain, it is used with a channel prediction technique.

4.  The apparatus of claim 1, wherein there are multiple curves connecting said two fed back matrixes and said interpolated beamforming matrixes are on a connecting curve, wherein each curve corresponds to a random realization of a channel variation and a curve which minimizes an average interpolation error is a geodesic connecting said multiple curves.

5.  The apparatus of claim 2, wherein interpolation is made for at least one beamforming matrix in said subband using said two fed back matrixes and wherein beamforming matrixes vary across said subband and feedback indexes of said two beamforming matrixes at said two subband ends are selected jointly to take interpolation into account.

**6.** The apparatus of claim 2, wherein for each interpolation, a one-shot feedback is sent from said receiver which fully depicts a beamforming matrix without reference to a previous feedback and wherein said one-shot feedback is for one end of said subband and feedback for another end of said subband is either one-shot feedback (610, 640) or differential feedback (620, 630, 650, 660).

**7.** The apparatus of claim 6, wherein after initialization with said one-shot feedback, two differential feedbacks at a time are sent using previous feedbacks.

**8.** The apparatus of claim 7, wherein for complexity reduction and performance enhancement, said receiver selects the two beamforming matrixes close to said two ends of said subband and said transceiver interpolates said beamforming matrixes only for a selected subset of subcarriers.

**9.** A method, comprising:

operating a transceiver as a base station, BS, in a wireless network that has been adapted for multiple input multiple output, MIMO, beamforming and further adapted for wireless communication with a receiver that feeds back to said transceiver two beamforming matrixes (360, 370) per subband to form $N_s$ vector pairs, where $N_s$ is a number of beamformed streams in the two beamforming matrixes;

linearly interpolating each vector pair in the angle domain along a Grassman manifold to determine an interpolated angle for each beamformed stream, wherein the interpolated angle is computed as $\theta_i(k) = a_k \theta_i$,

$$a_k = \left| \frac{f_k - f_A}{f_A - f_B} \right|$$

for $i = 1, \cdots, N_s$ where $\left| \frac{f_k - f_A}{f_A - f_B} \right|$ is inversely proportional to a frequency spacing between A's subcarrier and B's subcarrier of $|f_A - f_B|$ and is proportional to a frequency spacing between A's subcarrier and a k-th subcarrier of $|f_k - f_A|$, wherein A and B are the two beamforming matrixes;

determining an interpolated vector for each interpolated angle on a plane spanned by the vector pair associated with each angle pair; and

forming an interpolated beamforming matrix comprising the interpolated vectors for each of the beamformed streams, wherein the interpolated beamforming matrix is a unitary matrix or a non-unitary matrix, and the interpolated beamforming matrix is converted to a unitary matrix when the interpolated beamforming matrix is a non-unitary matrix.

**10.** The method of claim 9, wherein said two beamforming matrixes per subband are two beamforming matrixes for each end of said subband.

**11.** The method of claim 9, further comprising applying said interpolation across a frequency or time domain and when it is applied in said time domain, it is used with a channel prediction technique.

**12.** The method of claim 10, further comprising interpolating for all beamforming matrixes in said subband using said two fed back matrixes and wherein beamforming matrixes vary across said subband and feedback indexes of said two beamforming matrixes at said two subband ends jointly are selected to take interpolation into account.

**13.** The method of claim 12, further comprising sending, for each interpolation, a one-shot feedback from said receiver which fully depicts a beamforming matrix without reference to a previous feedback and wherein said one-shot feedback is for one end of said subband and feedback for another end of said subband is either one-shot feedback (610, 640) or differential feedback (620, 630, 650, 660).

**14.** The method of claim 13, further comprising sending two differential feedbacks at a time using previous feedbacks after initialization with said one-shot feedback.

**15.** The method of claim 14, wherein for complexity reduction and performance enhancement, said receiver selects the two beamforming matrixes close to said two ends of said subband and interpolates said beamforming matrixes only for a selected subset of subcarriers.

**16.** The method of claim 9, wherein there are multiple curves connecting said two fed back matrixes and said interpolated beamforming matrixes are on a connecting curve, wherein each curve corresponds to a random realization of a channel and a curve which minimizes an average interpolation error is a geodesic connecting said multiple curves.

17. A computer readable medium encoded with computer executable instructions which, when accessed, cause a machine to perform operations comprising the method of any of claims 9 to 16.

18. A system, **characterised by**:

an apparatus as claimed in any of claims 1-8 wherein the transceiver is operable as a base station, BS, in a wireless network that conforms to an Institute for Electronic and Electrical Engineers 802.16 standard; and said receiver is a transceiver operable as a mobile station, MS, in said wireless network and operable to communicate with said BS, wherein said MS feeds back to said BS two beamforming matrixes (360, 370) per subband to form $N_s$ vector pairs, where $N_s$ is a number of beamformed streams in the two beamforming matrixes and said BS interpolates said beamforming matrixes across said subband.

## Patentansprüche

1. Vorrichtung, umfassend:

einen Transceiver, der zur Strahlformung mit mehreren Eingängen und mehreren Ausgängen (MIMO) ausgelegt ist und weiterhin zur Kommunikation mit einem Empfänger ausgelegt ist, der eine Rückkopplung von zwei Strahlformungsmatrizen (360, 370) pro Teilband an den Transceiver unter Ausbildung von $N_S$ Vektorpaaren vornimmt, wobei $N_S$ eine Zahl strahlgeformter Ströme in den zwei Strahlformungsmatrizen ist, und wobei der Transceiver zu Folgendem ausgelegt ist:

linearem Interpolieren jedes Vektorpaars der Winkeldomäne entlang einer Graßmann-Mannigfaltigkeit zur Bestimmung eines interpolierten Winkels für jeden strahlgeformten Strom, wobei der interpolierte Winkel berechnet wird als $\theta_i(k) = a_k\theta_i$ für $i = 1, ..., N_S$, worin $a_k = \left|\frac{f_k - f_A}{f_A - f_B}\right|$ umgekehrt proportional zu einem Frequenzabstand zwischen dem Hilfsträger von A und dem Hilfsträger von B von $|f_A - f_B|$ ist und proportional zu einem Frequenzabstand zwischen dem Hilfsträger von A und einem k-ten Hilfsträger von $|f_k - f_A|$ ist, wobei A und B die zwei Strahlformungsmatrizen sind;
Berechnen eines interpolierten Vektors für jeden interpolierten Winkel einer Ebene, die von dem mit dem Vektorwinkel verknüpften Vektorpaar aufgespannt ist; und
Ausbilden einer interpolierten Strahlformungsmatrix, die die interpolierten Vektoren für jeden der strahlgeformten Ströme umfasst, wobei die interpolierte Strahlformungsmatrix eine unitäre oder eine nicht unitäre Matrix ist und die interpolierte Strahlformungsmatrix in eine unitäre Matrix umgewandelt wird, wenn die interpolierte Strahlformungsmatrix eine nicht unitäre Matrix ist.

2. Vorrichtung nach Anspruch 1, wobei die zwei Strahlformungsmatrizen pro Teilband zwei Strahlformungsmatrizen für jedes Ende des Teilbands sind.

3. Vorrichtung nach Anspruch 1, wobei Interpolation über eine Frequenz- oder Zeitdomäne angewendet wird und sie zusammen mit einer Kanalvorhersagetechnik verwendet wird, wenn sie in der Zeitdomäne angewendet wird.

4. Vorrichtung nach Anspruch 1, wobei mehrere Kurven, die die zwei rückgekoppelten Matrizen verbinden, vorhanden sind und sich die interpolierten Strahlformungsmatrizen auf einer Verbindungskurve befinden, wobei jede Kurve einer willkürlichen Realisierung einer Kanalvariation entspricht und eine Kurve, die einen durchschnittlichen Interpolationsfehler minimiert, eine die mehreren Kurven verbindende Geodätische ist.

5. Vorrichtung nach Anspruch 2, wobei Interpolation für mindestens eine Strahlformungsmatrix in dem Teilband unter Verwendung der zwei rückgekoppelten Matrizen durchgeführt wird und wobei Strahlformungsmatrizen innerhalb des Teilbands variieren und Rückkopplungsindices der zwei Strahlformungsmatrizen an den zwei Teilbandenden gemeinsam zur Berücksichtigung von Interpolation ausgewählt werden.

**6.** Vorrichtung nach Anspruch 2, wobei für jede Interpolation eine einmalige Rückkopplung von dem Empfänger gesendet wird, die eine Strahlformungsmatrix ohne Bezug zu einer vorherigen Rückkopplung vollständig darstellt, und wobei die einmalige Rückkopplung für ein Ende des Teilbands ist und die Rückkopplung für ein anderes Ende des Teilbands entweder eine einmalige Rückkopplung (610, 640) oder eine differenzielle Rückkopplung (620, 630, 650, 660) ist.

**7.** Vorrichtung nach Anspruch 6, wobei nach Initialisierung mit der einmaligen Rückkopplung jeweils zwei differenzielle Rückkopplungen unter Verwendung vorheriger Rückkopplungen gesendet werden.

**8.** Vorrichtung nach Anspruch 7, wobei der Empfänger zur Senkung der Komplexität und zur Verbesserung der Leistung die zwei Strahlformungsmatrizen nahe der zwei Enden des Teilbands auswählt und der Transceiver die Strahlformungsmatrizen nur für eine ausgewählte Teilmenge von Hilfsträgern interpoliert.

**9.** Verfahren, umfassend:

Betreiben eines Transceivers als Basisstation (BS) in einem drahtlosen Netzwerk, das zur Strahlformung mit mehreren Eingängen und mehreren Ausgängen (MIMO) ausgelegt ist und weiterhin zur drahtlosen Kommunikation mit einem Empfänger ausgelegt ist, der eine Rückkopplung von zwei Strahlformungsmatrizen (360, 370) pro Teilband an den Transceiver unter Ausbildung von $N_S$ Vektorpaaren vornimmt, wobei $N_S$ eine Zahl strahlgeformter Ströme in den zwei Strahlformungsmatrizen ist;
lineares Interpolieren jedes Vektorpaars der Winkeldomäne entlang einer Graßmann-Mannigfaltigkeit zur Bestimmung eines interpolierten Winkels für jeden strahlgeformten Strom, wobei der interpolierte Winkel berechnet wird als $\theta_i(k) = a_k\theta_i$, für $i = 1, ..., N_S$, worin $a_k = \left|\dfrac{f_k - f_A}{f_A - f_B}\right|$ umgekehrt proportional zu einem Frequenzabstand zwischen dem Hilfsträger von A und dem Hilfsträger von B von $|f_A - f_B|$ ist und proportional zu einem Frequenzabstand zwischen dem Hilfsträger von A und einem k-ten Hilfsträger von $|f_k - f_A|$ ist, wobei A und B die zwei Strahlformungsmatrizen sind;
Bestimmen eines interpolierten Vektors für jeden interpolierten Winkel einer Ebene, die von dem mit jedem Winkelpaar verknüpften Vektorpaar aufgespannt ist; und
Ausbilden einer interpolierten Strahlformungsmatrix, die die interpolierten Vektoren für jeden der strahlgeformten Ströme umfasst, wobei die interpolierte Strahlformungsmatrix eine unitäre oder eine nicht unitäre Matrix ist und die interpolierte Strahlformungsmatrix in eine unitäre Matrix umgewandelt wird, wenn die interpolierte Strahlformungsmatrix eine nicht unitäre Matrix ist.

**10.** Verfahren nach Anspruch 9, wobei die zwei Strahlformungsmatrizen pro Teilband zwei Strahlformungsmatrizen für jedes Ende des Teilbands sind.

**11.** Verfahren nach Anspruch 9, weiterhin umfassend das Anwenden der Interpolation über eine Frequenz- oder Zeitdomäne und das Verwenden zusammen mit einer Kanalvorhersagetechnik, wenn sie in der Zeitdomäne angewendet wird.

**12.** Verfahren nach Anspruch 10, weiterhin umfassen das Interpolieren aller Strahlformungsmatrizen in dem Teilband unter Verwendung der zwei rückgekoppelten Matrizen und wobei Strahlformungsmatrizen innerhalb des Teilbands variieren und Rückkopplungsindices der zwei Strahlformungsmatrizen an den zwei Teilbandenden gemeinsam zur Berücksichtigung von Interpolation ausgewählt werden.

**13.** Verfahren nach Anspruch 12, weiterhin umfassend das Senden einer einmaligen Rückkopplung von dem Empfänger bei jeder Interpolation, die eine Strahlformungsmatrix ohne Bezug zu einer vorherigen Rückkopplung vollständig darstellt, und wobei die einmalige Rückkopplung für ein Ende des Teilbands ist und die Rückkopplung für ein anderes Ende des Teilbands entweder eine einmalige Rückkopplung (610, 640) oder eine differenzielle Rückkopplung (620, 630, 650, 660) ist.

**14.** Verfahren nach Anspruch 13, weiterhin umfassend das Senden von jeweils zwei differenziellen Rückkopplungen unter Verwendung vorheriger Rückkopplungen nach Initialisierung mit der einmaligen Rückkopplung.

**15.** Verfahren nach Anspruch 14, wobei der Empfänger zur Senkung der Komplexität und zur Verbesserung der Leistung die zwei Strahlformungsmatrizen nahe der zwei Enden des Teilbands auswählt und die Strahlformungsmatrizen nur für eine ausgewählte Teilmenge von Hilfsträgern interpoliert.

16. Verfahren nach Anspruch 9, wobei mehrere Kurven, die die zwei rückgekoppelten Matrizen verbinden, vorhanden sind und sich die interpolierten Strahlformungsmatrizen auf einer Verbindungskurve befinden, wobei jede Kurve einer willkürlichen Realisierung eines Kanals entspricht und eine Kurve, die einen durchschnittlichen Interpolationsfehler minimiert, eine die mehreren Kurven verbindende Geodätische ist.

17. Rechnerlesbares Medium, das mit rechnerausführbaren Anweisungen programmiert ist, die bei Zugriff eine Maschine dazu veranlassen, Arbeitsabläufe umfassend das Verfahren nach einem der Ansprüche 9 bis 16 durchzuführen.

18. System, **gekennzeichnet durch**:

eine Vorrichtung nach einem der Ansprüche 1-8, wobei der Transceiver als Basisstation (BS) in einem drahtlosen Netzwerk betreibbar ist, das einem Standard 802.16 des Institute for Electronic and Electrical Engineers entspricht; und
dass der Empfänger ein Transceiver ist, der als Mobilstation (MS) in dem drahtlosen Netzwerk betreibbar ist und zur Kommunikation mit der BS betreibbar ist, wobei die MS eine Rückkopplung von zwei Strahlformungsmatrizen (360, 370) pro Teilband an die BS unter Ausbildung von $N_S$ Vektorpaaren vornimmt, wobei $N_S$ eine Zahl strahlgeformter Ströme in den zwei Strahlformungsmatrizen ist, und die BS die Strahlformungsmatrizen in dem Teilband interpoliert.

## Revendications

1. Appareil, comprenant :

un émetteur-récepteur adapté à la formation de faisceaux multi-entrée multi-sortie, MIMO, et adapté en outre à communiquer avec un récepteur qui effectue un retour d'information vers ledit émetteur-récepteur concernant deux matrices de formation de faisceaux (360, 370) par sous-bande dans le but de former $N_s$ paires de vecteurs, $N_s$ étant un nombre de flux formés en faisceaux dans les deux matrices de formation de faisceaux, et l'émetteur-récepteur étant adapté à :

interpoler linéairement chaque paire de vecteurs dans le domaine angulaire sur une variété grassmannienne dans le but de déterminer un angle interpolé pour chaque flux formé en faisceaux, l'angle interpolé étant

$$a_k = \left| \frac{f_k - f_A}{f_A - f_B} \right|$$

calculé sous la forme $\theta_i(k) = a_k\theta_i$, pour i=1,···,$N_S$ où                est inversement proportionnel à un espacement de fréquences $|f_A\text{-}f_B|$ entre la sous-porteuse de A et la sous-porteuse de B et est proportionnel à un espacement de fréquences $|f_k - f_A|$ entre la sous-porteuse de A et une k-ième sous-porteuse, A et B représentant les deux matrices de formation de faisceaux ;
calculer un vecteur interpolé pour chaque angle interpolé sur un plan couvert par la paire de vecteurs associée à l'angle de vecteurs ; et
former une matrice de formation de faisceaux interpolée comprenant les vecteurs interpolés pour chacun des flux formés en faisceaux, la matrice de formation de faisceaux interpolée étant une matrice unitaire ou une matrice non unitaire, et la matrice de formation de faisceaux interpolée étant transformée en une matrice unitaire si la matrice de formation de faisceaux interpolée est une matrice non unitaire.

2. Appareil selon la revendication 1, dans lequel lesdites deux matrices de formation de faisceaux par sous-bande sont deux matrices de formation de faisceaux pour chaque extrémité de ladite sous-bande.

3. Appareil selon la revendication 1, dans lequel ladite interpolation est appliquée sur l'étendue d'un domaine fréquentiel ou temporel et, lorsqu'elle est appliquée dans ledit domaine temporel, elle est associée à une technique de prédiction de canal.

4. Appareil selon la revendication 1, dans lequel de multiples courbes relient lesdites deux matrices faisant l'objet du retour d'information et lesdites matrices de formation de faisceaux interpolées se trouvent sur une courbe de liaison, chaque courbe correspondant à une réalisation aléatoire d'une variation de canal et une courbe qui minimise une erreur d'interpolation moyenne constituant une géodésique reliant lesdites multiples courbes.

5. Appareil selon la revendication 2, dans lequel l'interpolation est réalisée pour au moins une matrice de formation de faisceaux dans ladite sous-bande à l'aide desdites deux matrices faisant l'objet du retour d'information, et dans lequel des matrices de formation de faisceaux varient sur l'étendue de ladite sous-bande et des index de retour d'information desdites deux matrices de formation de faisceaux au niveau desdites deux extrémités de sous-bande sont sélectionnés conjointement pour tenir compte de l'interpolation.

6. Appareil selon la revendication 2, dans lequel, pour chaque interpolation, un retour d'information en une seule fois est envoyé depuis ledit récepteur, constituant une représentation complète d'une matrice de formation de faisceaux sans référence aucune à un retour d'information précédent, et dans lequel ledit retour d'information en une seule fois concerne une extrémité de ladite sous-bande et le retour d'information concernant une autre extrémité de ladite sous-bande prend la forme soit d'un retour d'information en une seule fois (610, 640), soit d'un retour d'information différentiel (620, 630, 650, 660).

7. Appareil selon la revendication 6, dans lequel, suite à une initialisation à l'aide dudit retour d'information en une seule fois, deux retours d'information différentiels sont envoyés à la fois à l'aide de retours d'information précédents.

8. Appareil selon la revendication 7, dans lequel, aux fins de réduire la complexité et d'améliorer les performances, ledit récepteur sélectionne les deux matrices de formation de faisceaux proches desdites deux extrémités de ladite sous-bande, et ledit émetteur-récepteur interpole lesdites matrices de formation de faisceaux uniquement pour un sous-ensemble sélectionné de sous-porteuses.

9. Procédé, comprenant les étapes consistant à :

faire fonctionner un émetteur-récepteur comme une station de base, BS, dans un réseau sans fil qui a été adapté à la formation de faisceaux multi-entrée multi-sortie, MIMO, et adapté en outre à communiquer sans fil avec un récepteur qui effectue un retour d'information vers ledit émetteur-récepteur concernant deux matrices de formation de faisceaux (360, 370) par sous-bande dans le but de former $N_s$ paires de vecteurs, $N_s$ étant un nombre de flux formés en faisceaux dans les deux matrices de formation de faisceaux ;
interpoler linéairement chaque paire de vecteurs dans le domaine angulaire sur une variété grassmannienne dans le but de déterminer un angle interpolé pour chaque flux formé en faisceaux, l'angle interpolé étant calculé

$$a_k = \left| \frac{f_k - f_A}{f_A - f_B} \right|$$

sous la forme $\theta_i(k) = a_k \theta_i$, pour $i=1,\cdots,N_S$ où               est inversement proportionnel à un espacement de fréquences $|f_A - f_B|$ entre la sous-porteuse de A et la sous-porteuse de B et est proportionnel à un espacement de fréquences $|f_k - f_A|$ entre la sous-porteuse de A et une k-ième sous-porteuse, A et B représentant les deux matrices de formation de faisceaux ;
déterminer un vecteur interpolé pour chaque angle interpolé sur un plan couvert par la paire de vecteurs associée à chaque paire d'angles ; et
former une matrice de formation de faisceaux interpolée comprenant les vecteurs interpolés pour chacun des flux formés en faisceaux, la matrice de formation de faisceaux interpolée étant une matrice unitaire ou une matrice non unitaire, et la matrice de formation de faisceaux interpolée étant transformée en une matrice unitaire si la matrice de formation de faisceaux interpolée est une matrice non unitaire.

10. Procédé selon la revendication 9, dans lequel lesdites deux matrices de formation de faisceaux par sous-bande sont deux matrices de formation de faisceaux pour chaque extrémité de ladite sous-bande.

11. Procédé selon la revendication 9, comprenant en outre l'étape consistant à appliquer ladite interpolation sur l'étendue d'un domaine fréquentiel ou temporel et, lorsqu'elle est appliquée dans ledit domaine temporel, à l'associer à une technique de prédiction de canal.

12. Procédé selon la revendication 10, comprenant en outre l'étape consistant à effectuer une interpolation pour toutes les matrices de formation de faisceaux dans ladite sous-bande à l'aide desdites deux matrices faisant l'objet du retour d'information, et dans lequel des matrices de formation de faisceaux varient sur l'étendue de ladite sous-bande et des index de retour d'information desdites deux matrices de formation de faisceaux au niveau desdites deux extrémités de sous-bande sont sélectionnés conjointement pour tenir compte de l'interpolation.

13. Procédé selon la revendication 12, comprenant en outre l'étape consistant à envoyer, pour chaque interpolation, un retour d'information en une seule fois depuis ledit récepteur, constituant une représentation complète d'une matrice de formation de faisceaux sans référence aucune à un retour d'information précédent, et dans lequel ledit retour d'information en une seule fois concerne une extrémité de ladite sous-bande et le retour d'information concernant une autre extrémité de ladite sous-bande prend la forme soit d'un retour d'information en une seule fois (610, 640), soit d'un retour d'information différentiel (620, 630, 650, 660).

14. Procédé selon la revendication 13, comprenant en outre l'étape consistant à envoyer deux retours d'information différentiels à la fois à l'aide de retours d'information précédents suite à une initialisation à l'aide dudit retour d'information en une seule fois.

15. Procédé selon la revendication 14, dans lequel, aux fins de réduire la complexité et d'améliorer les performances, ledit récepteur sélectionne les deux matrices de formation de faisceaux proches desdites deux extrémités de ladite sous-bande, et interpole lesdites matrices de formation de faisceaux uniquement pour un sous-ensemble sélectionné de sous-porteuses.

16. Procédé selon la revendication 9, dans lequel de multiples courbes relient lesdites deux matrices faisant l'objet du retour d'information et lesdites matrices de formation de faisceaux interpolées se trouvent sur une courbe de liaison, chaque courbe correspondant à une réalisation aléatoire d'un canal et une courbe qui minimise une erreur d'interpolation moyenne constituant une géodésique reliant lesdites multiples courbes.

17. Support lisible par ordinateur codé à l'aide d'instructions exécutables par ordinateur, l'accès auxquelles amène une machine à accomplir des opérations comprenant le procédé selon l'une quelconque des revendications 9 à 16.

18. Système, **caractérisé par** :

un appareil selon l'une quelconque des revendications 1 à 8, dans lequel l'émetteur-récepteur est apte à fonctionner comme une station de base, BS, dans un réseau sans fil conforme à une norme 802.16 de l'Institute for Electronic and Electrical Engineers ; et
le fait que ledit récepteur est un émetteur-récepteur apte à fonctionner comme une station mobile, MS, dans ledit réseau sans fil et apte à fonctionner pour communiquer avec ladite BS, ledit MS effectuant un retour d'information vers ladite BS concernant deux matrices de formation de faisceaux (360, 370) par sous-bande dans le but de former $N_s$ paires de vecteurs, $N_s$ étant un nombre de flux formés en faisceaux dans les deux matrices de formation de faisceaux, et ladite BS interpolant lesdites matrices de formation de faisceaux sur l'étendue de ladite sous-bande.

*FIG. 1*

*FIG. 2*

FIG. 3

EP 2 457 334 B1

*FIG. 4*

*FIG. 5*

*FIG. 6*

*FIG. 7*

EP 2 457 334 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007206626 A

**Non-patent literature cited in the description**

- **CHOI, J. et al.** Interpolation based transmit beamforming for MIMO-OFDM with limited feedback. *IEEE Trans. Signal Processing,* 01 November 2005, vol. 53 (11), 4125-4135

- **TARKESH PANDE et al.** Reduced feedback MIMO-OFDM pre-coding and antenna selection. *IEEE Trans. Signal Processing,* 01 May 2007, vol. 55 (5), 2284-2293